Europäisches Patentamt

European Patent Office

Office européen des brevets

(11) Publication number: **0 515 806 A1**

# EUROPEAN PATENT APPLICATION

(21) Application number: **92105895.4**

(22) Date of filing: **06.04.92**

(51) Int. Cl.5: **B27K 7/00, C09D 5/14**

(30) Priority: **27.05.91 IT GE910076**

(43) Date of publication of application:
**02.12.92 Bulletin 92/49**

(84) Designated Contracting States:
**AT BE CH DE DK ES FR GB GR LI NL PT SE**

(71) Applicant: **LA TECNOCHIMICA S.A.S. DI UGO MESTRALLET & C.**
**Piazza Risorgimento n. 8**
**I-10143 Torino(IT)**

(72) Inventor: **Mestrallet, Ugo**
**Piazza Risorgimento n. 8**
**I-10143 Torino(IT)**

(74) Representative: **Ferrarotti, Giovanni**
**Studio Consulenza Tecnica Dr. Ing. Giovanni Ferrarotti Via Alla Porta Degli Archi 1/7**
**I-16121 Genova(IT)**

(54) **Method for biological and chemical-physical protection of cork stoppers.**

(57)   This method covers the biological and chemico-physical protection of cork stoppers and is consisting of two combined consecutive layers, the first of which is a primer or subcoat made up of a solution or mixture of virtually pure glycerin and of a cationic surfactant having a biological function whereas the second surface coat is consisting of a silicone based emulsion to which a plastic polymer may be added so as better to fix the subcoat and to act as a lubricant.

EP 0 515 806 A1

This invention covers a method for biological, chemico-physical protection of cork stoppers and to prevent the modification of the chromatic characteristics of stoppers earmarked for foodstuffs and in particular for beverages. It is a well known fact that cork factories and users of cork products have often to cope with the problem of bad smells caused by direct contact of the corks with some components of the bottled liquid, such as sulphur dioxide in wines and with moulds and mycetes already present inside the cork or which may form on its surface during storage or shipment.

Hitherto, no valid steps have been taken to prevent the formation of these bad smells or the action of moulds or mycetes. In the practice, the stoppers are only lubricated so as to facilitate plugging, guarantee a perfect seal, allow for pasteurization if required and facilitate uncorking.

As to lubrication of the corks, reference is made specifically to EP-A-0277603 in which a stable silicone-based emulsion is proposed, consisting of a silicone fluid appropriate for food, to which inert and non toxic thickeners are added, such as atomized amorphous silica gel and/or a metal salt stearate. This emulsion has the great advantage of providing for excellent lubrication, pasteurization of the beverage without trickling into the beverage, an excellent seal and easy uncorking. However, this lubricant has no protective biological action against the formation of bad smells or against the action of moulds and mycetes.

It is also known that, according to the Italian Patent Application n° 12484 A/90, the addition of a plastic polymer such as tetrafluorethylene (TFE) to the above mentioned silicone based emulsion in order to plasticize and lubricate the corks at the same time, is much simpler and cheaper than the conventional hot plasticization methods followed by lubrication.

This invention has the aim to devise a rational and economic method for complete biological and chemico-physical protection of the stoppers without altering the reticular structure of the corks, by creating a dual barrier against pathogens and against physical and chemical actions inside and outside the stoppers.

This objective is attained by the method subject matter of this invention consisting in applying two product coats on the stopper surface in two consecutive complementary and inseparable stages, i.e.:

**a) FIRST STAGE** - an initial primer or subcoat is applied to the cork surface. This subcoat is consisting of a well balanced synergic mixture or solution of virtually pure glycerin and ofa cationic surfactant belonging to the class of quarternary ammonium either in solid, liquid or mixed solid-liquid state.

Inert inorganic and non toxic pigments may be added to this glycerin-surfactant mixture or solution to meet any chromatic requirements of the cork stoppers or for bleaching purposes.

**b) SECOND STAGE** - An external coat is applied on the cork to fix the subcoat and to provide for lubrication or plasto-lubrication. This second coat is consisting of a silicone-based emulsion or of a mixture of silicone and plastic polymer emulsion.

This set of **two consecutive** coats which must be applied one on top of the other will provide for perfect bio-physico-chemical protection of the stoppers since the first coat is based on the bacteriostatic and softening action of glycerin, highly facilitating in-depth penetration of the cationic surfactant which has the function to act as a truly hexogenous and endogenous barrier. The second coat, characterized by water-repellence and low surface-tension, the effective lubricating properties of which are already well known, has the aim to fix the subcoat onto the cork and to isolate it from any direct contact with the bottled beverages.

In this way, special measures, such as nitrogen or gaseous sulphur dioxide insufflation, as sometimes adopted for long-term storage or shipment of the stoppers will no longer be necessary since they may cause the formation of strongly smelling mercaptan derivatives, nor will vacuum-packageing be required.

The biological protecting subcoat and the second lubricating coat may be applied on the cork stoppers by various techniques.

They may be sprayed or spread on the cork surface in a normal automatic or semi-automatic rotary tumbler, with due consideration for the liquid or creamy state of the mixture or emulsion.

Some formulation and application examples of the two above mentioned coats are reported below for indicatory purposes:

**EXAMPLE N°1**

**First stage**

The subcoat which is transparent and has a normal biological action, will have the following composition in weight:

| a) | virtually pure glycerin | 50% |
| b) | anhydrous tetradecylbenzyldimethyl ammonium chloride | 50% |

This mixture should preferably be applied by spraying but may also be applied manually in a stainless steel rotary drum for about twenty minutes at the rate of 100-200 gr for 10,000 cork stoppers, according to their surface dimensions.

**SECOND STAGE**

The second silicone-based protective lubricating and fixing coat will have the following composition in weight:

| a) | fluid silicone-based dimethylpolysiloxane | 77% |
| b) | Pharma magnesium stearate | 20% |
| c) | Atomized silicon dioxide suitable for foodstuffs | 3% |

It will also be possible to use a plastosilicone based protective fixing agent and lubricant having the following composition:

| a) | silicone-based dimethylpolysiloxane fluid | 67% |
| b) | alimentary type polytetrchlorofluoroethylene | 20% |
| c) | Pharma lithium stearate | 10% |
| d) | Atomized silicon dioxide suitable for foodstuffs | 3% |

One of the two lubricant fixing agents shall be applied in a rotary tumbler for about twenty minutes at the rate of 150 - 400 gr for 10,000 stoppers, according to their surface dimensions.

**EXAMPLE N°2**

**First stage**

The first transparent coat having a marked biological action, will have the following composition:

| a) | virtually pure glycerin | 40% |
| b) | cocobenzyldimethylammonium chloride | 60%. |

This solution shall be exclusively applied in automatic or semi-automatic tumblers provided with spray nozzles at the rate of 100-200 gr for 10,000 stoppers, according to their surface dimensions.

**Second stage**

Modified silicone-based protective lubricantating and fixing agents or complementary plasto-silicone fixing agents shall be formulated and applied according to the prerequisites described in the SECOND STAGE of the previous example n°1.

**EXAMPLE N°3**

**First Stage**

If the cork stoppers have to be physically bleached as well as being biologically stabilized at the same time, the primer or subcoat will have the following composition:

| a) | virtually pure glycerin: | 55% - 50% |
|---|---|---|
| b) | anhydrous tetradecylbenzyl dimetalammonium chloride | 30% - 35% |
| c) | Atomized titanium dioxide for foodstuffs | 15 - 15%. |

This mixture shall be preferably applied by spraying, but may also be applied manually, in a stainless steel rotary tumbler until all corks have achieved the same colour shade at the rate of 200 - 400' gr. for 10,000 stoppers, according to their surface dimensions.

**Second Stage**

In this case, the protective modified silicone or plasto-silicone based fixing and lubricating agent shall be perfectly transparent so as not to alter the bleaching effect.

Therefore the protective transparent modified silicone based fixing and lubricating agent shall have the following composition:

| a) | silicone-based dimethylpolysiloxane liquid | 90% |
|---|---|---|
| b) | atomized silicon dioxide for foodstuffs | 10% |

Conversely, the transparent protective plasto-silicone fixing lubricant shall have the following composition:

| a) | Silicone-based dimethylpolysiloxane fluid | 75% |
|---|---|---|
| b) | Alimentary type polytetrafluorethylene | 20% |
| c) | atomized silicon dioxide for foodstuffs | 5%. |

One of these two transparent protective lubricating and fixing agents shall be applied in a stainless steel rotary tumbler for about twenty minutes at the rate of 150 - 400 gr for 10,000 cork stoppers according to their suface dimensions.

**EXAMPLE N°4**

**First Stage**

If it is necessary that previously bleached stoppers should return to their original cork colour while being biologically stabilized, the subcoat should have the following composition:

| a) | Virtually pure glycerin: | 37% - 47% |
|---|---|---|
| b) | Anhydrous tetradecylbenzyldimetalammonium | 60% - 50% |
| c) | Alimentary type ferrous oxide | 1.8 - 1.8% |
| d) | Alimentary type ferric oxide | 1.2 - 1.2% |

This mixture should preferably be applied by spraying, but may also be applied manually, in a stainless steel rotary tumbler until all stoppers have the same color shade, at the rate of 100-200 gr. for 10,000 stoppers, according to their surface dimensions.

**Second Stage**

The prerequisites already described for the SECOND STAGE of EXAMPLE N°3 also apply For this example and as far as the application of protective complementary finishing lubricant fixing agents is concerned.

Obviously, the products and their ratios indicated in the foregoing exmples are only indicatory and non restrictive, since products similar to those described above may be used at different ratios according to need, so that the subcoat may have biological functions only, while the second coat may have the protective function of the subcoat as well as a lubricating function, the two layers being consecutively applied according to the objectives of the Patent.

Products other than those described above may also be used for bleaching and chromatic adjustment of the cork stoppers provide they have the main aims set forth in this description.

## Claims

1. Method for biological and chemico-physical protection of cork stoppers for vessels containing foodstuffs, **characterized** by the fact that it is consisting of two consecutive and combined coatings, i.e.:
   - a primer or subcoat having a biological function, consisting of a well balanced synergic mixture or solution of virtually pure glycerin and of a cationic surfactant suitable for foodstuffs, belonging to the Class of quarternary ammonium, in solid, liquid form or soli-liquid state;
   - a second coat to fix the subcoat, having lubricating or plastolubricating functions, consisting of a silicone-based emulsion suitable for foodstuffs or of a silicone-based emulsion batched with a non toxic, inert plastic polymer .

2. Method as described in Claim 1, **characterized** by the fact that inert, non toxic bleaching products may be added to the primer or subcoat to adjust the colour shade of the cork stoppers.

3. Method as described in Claim 1, **characterized** by the fact that the first and second coat are consecutively applied by spraying or in automatic or semi-automatic tumblers.

4. Method as described in Claim 1, **characterized** by the fact that the primer or subcoat is consisting, for example, of:
   - virtually pure Glycerin at the rate of 40% - to 60% in weight;
   - quarternary ammonium suitable for foodstuffs at the rate of 60% - 25% in weight;
   - Additives, suitable for alimentary purposes, if required for bleaching or adjustment of the colour shade of the cork stoppers at the rate of 0 - 15% in weight.

5. Method as described in Claim 1, **characterized** by the fact that the second coat has sealing and lubricating functions and is, for example, consisting of:
   - a silicone-based fluid suitable for foodstuffs at the rate of 77 - 90%;
   - a thickener suitable for foodstuffs, at the rate of 23 - 10% in weight.

6. Method as described in Claim 1, **characterized** by the fact that the second coat having plasto-lubricating and sealing functions is consisting of:
   - a silicone based fluid suitable for foodstuffs at the rate of 67 - 75% in weight;
   - a thickener for the food industry at the rate of 10 - 15% 15% in weight;
   - a plastic polymer for foodstuffs at the rate of 23 - 20% in weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2 336 841 (R.WÖRZ)<br>* page 2, line 19 - page 3, line 22; claims 1-5,8-12,17; examples * | 1-6 | B27K7/00<br>C09D5/14 |
| A | DE-A-1 642 205 (E.STAUDT)<br>* the whole document * | 1-6 | |
| D,A | EP-A-0 277 603 (LA TECNOCHIMICA S.A.S. DI UGO MESTRALLET)<br>* the whole document * | 1-6 | |
| A | EP-A-0 351 503 (LA TECNOCHEMICA S.A.S. DI UGO MESTRALLET)<br>* the whole document * | 1-6 | |
| A | FR-A-2 342 074 (N.SALKIN)<br>* claims 1-8,17; example 1 * | 1-6 | |

TECHNICAL FIELDS
SEARCHED (Int. Cl.5 )

B27K
C09D

The present search report has been drawn up for all claims

| Place of search | Date of completion of the search | Examiner |
|---|---|---|
| THE HAGUE | 04 SEPTEMBER 1992 | FLETCHER A.S. |

EPO FORM 1503 03.82 (P0401)